# EUROPEAN PATENT SPECIFICATION

(11) **EP 1 328 599 B1**
(45) Date of publication and mention of the grant of the patent: **07.12.2005**
(21) Application number: 01918242.7
(22) Date of filing: 26.02.2001
(51) Int. Cl.: C09J 5/00, C09J 7/02, C09J 11/06

(54) **METHODS OF USING LATENT, OVER-TACKIFIED, ADHESIVES**
VERFAHREN ZUR VERWENDUNG VON LATENTEN, ÜBER-TACKIFIZIERTEN KLEBSTOFFEN
PROCEDES D'UTILISATION D'ADHESIFS LATENTS RENDUS TRES HYPER-COLLANTS

(30) Priority: 25.10.2000 US 697005
(43) Date of publication of application: 23.07.2003
(73) Proprietor: 3M Innovative Properties Company, St. Paul, MN 55133-3427 (US)
(72) Inventor: EVERAERTS, Albert, I., Saint Paul, MN 55133-3427 (US); SHERMAN, Audrey, A., Saint Paul, MN 55133-3427 (US); MA, JingJing, Saint Paul, MN 55133-3427 (US); NGUYEN, Lang, N., Saint Paul, MN 55133-3427 (US)
(74) Representative: Vossius & Partner
(86) International application number: PCT/US2001/006068
(87) International publication number: WO 2002/034853

(56) References cited:
- EP-A- 0 879 863
- US-A- 4 248 748
- US-A- 5 252 393
- DATABASE WPI Section Ch, Week 199408 Derwent Publications Ltd., London, GB; Class A18, AN 1994-062211 XP002178660 & JP 06 017018 A (DAINIPPON INK & CHEM KK) , 25 January 1994 (1994-01-25)
- DATABASE WPI Section Ch, Week 198751 Derwent Publications Ltd., London, GB; Class A18, AN 1987-359833 XP002178661 & JP 62 263270 A (FUKUMOTO H), 16 November 1987 (1987-11-16)

## Description

This invention relates to a method of applying over-tackified adhesives that have latent pressure sensitive adhesive properties, that can be activated by a plasticizer. This invention further relates to a method of adhering two substrates together using said adhesive.

Pressure sensitive adhesives have found broad use in a wide variety of forms and applications. The tackiness inherent in pressure sensitive adhesives (PSAs) makes them difficult to process and deliver, however. Delivery of a PSA-coated tape to a substrate, for example, requires that the tacky PSA surface be protected by a release liner if the tape is used in segments, or either a release liner or a low adhesion backsize if the tape is used in roll form.

One technique for making a pressure sensitive adhesive from a non-tacky adhesive coating is to use heat to activate the adhesive. The coated adhesive becomes tacky upon the addition of heat, thereby allowing a bond to be made, and upon cooling the surface returns to its non-tacky state.

Heat activation of PSAs has several limitations, however. This technique is not useful to prepare a permanently tacky material since the PSA properties are transient. That is, only when such an adhesive is heated, is it tacky. Also, it is difficult to selectively render tacky a coated adhesive surface through the addition of heat. If the adhesive is to be activated by the user before application to the substrate, heating the adhesive coating prior to application may not be convenient or even possible. Further, if the adhesive is to be applied to a thermally sensitive substrate such as electronic devices or low melting polymer film, activation by heat may be undesirable.

US-A-5,252,393 relates to a thermal delayed tack adhesive composition which comprises a certain aqueous resin dispersion. In JP-A-60/17018 an adhesive composition containing 100 parts by weight of a specific polymer, 10 to 200 parts by weight of a specific tackifier and 50 to 500 parts by weight of a specific crystalline plasticizer is described.

The present invention is directed to methods of using latent, over-tackified, adhesives that can be activated with a plasticizer upon demand to form a pressure sensitive adhesive.

In one embodiment, there is provided a method of applying a pressure sensitive adhesive to a substrate that includes: providing a substrate; applying a latent, over-tackified, adhesive to the substrate; and applying a plasticizing agent which is compatible with the latent, over-tackified, adhesive to activate the latent, over-tackified, adhesive to form a pressure sensitive adhesive. Preferably, applying the plasticizing agent occurs subsequent to applying the latent, over-tackified, adhesive to the substrate. If desired, the plasticizing agent is applied in selective regions to the latent, over-tackified, adhesive disposed on the substrate.

In other embodiments, the latent, over-tackified, adhesive and the plasticizing agent are simultaneously applied to the substrate. In this embodiment, the plasticizing agent is preferably a solid. Preferably, heat is applied to the plasticizing agent to melt it and cause it to activate the latent, over-tackified, adhesive to form a pressure sensitive adhesive. If desired, the heat can be applied in selective regions to the plasticizing agent and latent, over-tackified, adhesive disposed on the substrate.

In another embodiment, there is provided a method of adhering substrates together that includes: providing a first substrate; applying a latent, over-tackified, adhesive to the first substrate; and applying a plasticizing agent which is compatible with the latent, over-tackified, adhesive to activate the latent, over-tackified, adhesive to form a pressure sensitive adhesive; and applying a second substrate to contact the pressure sensitive adhesive disposed on the first substrate.

As used herein:
"adhesive" refers to the adhesive composition, and may also refer to the adhesive layer of an adhesive article.
"latent, over-tackified, adhesive" refers to an adhesive that does not have adhesive properties (e.g., is not tacky) due to a relatively large amount of tackifier, but does acquire adhesive properties once it is activated by the application of a plasticizing agent.
"pressure sensitive adhesive" or "PSA" refers to a viscoelastic material that possesses the following properties: (1) aggressive and permanent tack, (2) adherence with no more than finger pressure, (3) sufficient ability to hold onto an substrate, and (4) sufficient cohesive strength to be removed cleanly from the substrate:
"compatible" refers to plasticizing agents that: (1) exhibit no gross phase separation from the latent, over-tackified, adhesive when combined in the prescribed amounts; (2) once mixed with the latent, over-tackified, adhesive, do not significantly phase separate therefrom upon aging; and (3) function as a rheological modification agent for the latent, over-tackified, adhesive, such that the plasticized composition exhibits pressure sensitive properties as defined above.
"non-volatile" refers to plasticizing agents that, when combined with the latent, over-tackified, adhesives of this invention, generate less than 3% VOC (volatile organic content). The VOC content can be determined analogously to ASTM D 5403-93 by exposing the coated composition to 100±5°C in a forced draft oven for 1 hour. If less than 3% plasticizing agent is lost from the latent, over-tackified, adhesive composition, then the plasticizing agent is considered "non-volatile."

This invention relates to methods of applying latent, over-tackified, adhesives and activating the adhesives, for example, to adhere substrates together. In the methods of the present invention, a latent, over-tackified, adhesive is applied to a substrate to form a coating, which can be continuous or discontinuous, and activated to provide adhesive properties, preferably pressure sensitive adhesive properties, using a plasticizer (referred to herein as an activation aid).

Advantages of using the latent, over-tackified, adhesives described herein include: no need for a liner to protect the adhesive prior to use; the ability to activate the adhesive on demand; and the ability to selectively activate the adhesive in an imagewise fashion.

The latent, over-tackified, adhesive useful in the present invention is typically applied at a thickness of at least about 10 microns (i.e., micrometers), and preferably, at least about 20 microns. Multiple layers of latent, over-tackified, adhesive can be applied to a substrate using the same or different latent, over-tackified, adhesives. If desired, these layers can be optionally separated by nonadhesive layers.

Upon the application of a plasticizing agent, all or a portion of the latent, over-tackified, adhesive is activated to a material having pressure sensitive adhesive properties. The plasticizing agent can be optionally supplemented with the application of pressure, for example, to adhere two substrates together. It can be applied in a variety of manners. For example, a plasticizer can be applied in solid or liquid form. It can be encapsulated if desired. It can be sprayed onto the latent adhesive, or the latent adhesive can be otherwise overlaid with plasticizer (e.g., in powder or film form). It can be applied in an imagewise fashion if desired. It can be applied prior to, simultaneously with, or subsequent to, deposition of the latent adhesive on a substrate. For example, a latent, over-tackified, adhesive can be combined with (mixed with, overcoated with, or undercoated with) a solid plasticizer in the form of a powder, film, particles, or the like, and heated to a temperature sufficient to melt the plasticizer and activate the adhesive to form pressure sensitive adhesive properties of the combined latent, over-tackified, adhesive and the plasticizer. Alternatively, a liquid plasticizing agent can be applied by means of spray, flood, or other liquid delivery techniques (such as ink jet) to the areas of the latent, over-tackified, adhesive.

### Latent, Over-Tackified, Adhesives

A latent, over-tackified, adhesive is one that includes an elastomer and a large amount of tackifying resin, the latter being included in a sufficient amount to increase the glass transition temperature (Tg) of the resultant adhesives to a level needed for convenient and effective room-temperature handling of sheets coated with the adhesive, while leaving the adhesive with the capacity for strong plasticizer-activatable bonds. Such adhesives are referred to herein as "over-tackified" adhesives. Examples are disclosed in U.S. Pat. No. 4,248,748 (McGrath et al.).

In such "over-tackified" adhesives, the tackifying resins are generally well-known resins, which are typically thermoplastic, resinous, room-temperature solids characterized by their ability to increase the glass transition temperature (Tg) and the tackiness of an elastomer. Tackiness can be measured by a variety of tests, such as the "inclined trough" or "rolling ball" test in which a stainless steel ball is allowed to roll down an inclined trough at the bottom of which a tape coated with the mixture being tested is supported. Useful tackifying resins will usually increase the tackiness of conventional pressure sensitive adhesive polymers when added in typical amounts of about 20 to 100 parts per 100 parts of adhesive polymer. Over-tackified adhesives will usually result when tackifying resins are added in amounts higher than needed to make a pressure sensitive adhesive.

Naturally occurring materials, which are typically complex mixtures of high-molecular-weight organic acids and related neutral materials, are a common form of tackifying resin. Wood or other rosins, or modified forms of such naturally occurring rosins, e.g., hydrogenated or esterified rosins, are particularly useful. Polymers of terpene, phenol- or styrene-modified terpenes, and low-molecular-weight styrene resins are also useful. Examples of other suitable tackifying resins are listed below.

The over-tackified adhesives can be derived from an elastomer that is typically used in pressure sensitive adhesives. Such over-tackified adhesives are low in tack or totally tack-free at room temperature (i.e., about 20°C to about 25°C). They derive their low tack or no tack characteristics at room temperature from their high glass transition temperatures (typically, at least about 10°C) and/or high shear storage moduli (typically, at least 5 x 10⁵ Pascals at 23°C and 1 Hz). To transform the over-tackified adhesive to a material that exhibits pressure sensitive adhesive properties, a plasticizing agent is used. Suitable plasticizing agents are those that can lower the latent, over-tackified, adhesive's Tg to below about 10°C, preferably below 0°C, and its shear storage modulus to below the Dahlquist Criterion, which is defined in the Handbook of Pressure Sensitive Adhesive Technology, Donatas Satas (Ed.), 2^{nd} Edition, pp. 172-173, Van Nostrand Reinhold, New York, NY, 1989.

Examples of latent, over-tackified, adhesives useful in the present invention include natural rubbers, synthetic rubbers, styrene block copolymers, (meth)acrylics, poly(alphaolefins), and silicones.

Latent, over-tackified, natural rubber adhesives include natural rubber that may range in grade from a light pale crepe grade to a darker ribbed smoked sheet and includes such examples as CV- 60, a controlled viscosity rubber grade and SMR-5, a ribbed smoked sheet rubber grade. Tackifying resins used to over-tackify natural rubbers generally include, but are not limited to, wood rosin and its hydrogenated derivatives, terpene resins of various softening points, and petroleum-based resins.

Latent, over-tackified, synthetic rubber adhesives include synthetic rubbers that are generally rubbery elastomers such as butyl rubber, a copolymer of isobutylene with less than 3 percent isoprene, polyisobutylene, a homopolymer of isoprene, polybutadiene, styrene/butadiene rubber, polybutadiene, or styrene/butadiene rubber. An example of a synthetic rubber is that commercially available from B.F. Goodrich under the trade designation "AMERIPOL 101 IA," a styrene/butadiene rubber. Tackifiers that are useful to over-tackify synthetic rubbers include derivatives of rosins, polyterpenes, C5 aliphatic olefin-derived resins, and C9 aromatic/C5 aliphatic olefin-derived resins.

Latent, over-tackified, styrene block copolymer adhesives generally include elastomers of the A-B or A-B-A type, where A represents a thermoplastic polystyrene block and B represents a rubbery block of polyisoprene, polybutadiene, or poly(ethylene/butylene), and resins. Examples of the various block copolymers useful in the adhesives include linear, radial, star and tapered styrene-isoprene block copolymers such as those commercially available from Shell Chemical Co. under the trade designations "KRATON D1107," "KRATON G1657," "KRATON G1750," and "KRATON D1118." The polystyrene blocks tend to form domains in the shape of spheroids, cylinders, or lamellae that cause the block copolymer adhesives to have two phase structures. Resins that associate with the rubber phase generally develop tack in the pressure sensitive adhesive. Examples of rubber phase associating resins include aliphatic olefin-derived resins, such as those commercially available from Goodyear under the trade designations "ESCOREZ 1300" and "WINGTACK"; rosin esters, such as those commercially available from Hercules, Inc. under the trade designations "FORAL" and "STAYBELITE Ester 10"; hydrogenated hydrocarbons, such as that commercially available from Exxon under the trade designation "ESCOREZ 5000"; polyterpenes, such as that commercially available from Hercules, Inc. under the trade designation "PICCOLYTE A"; and terpene phenolic resins derived from petroleum or terpentine sources, such as that commercially available under the trade designation "PICCOFYN A100." Resins that associate with the thermoplastic phase tend to stiffen the pressure sensitive adhesive.

Latent, over-tackified, (meth)acrylic adhesives generally include from 100 to 80 weight percent of a C4-C12 alkyl ester component such as, for example, isooctyl acrylate, 2-ethyl-hexyl acrylate and n-butyl acrylate, and from 0 to 20 weight percent of a polar component or cohesively reinforcing component, such as, for example, acrylic acid, methacrylic acid, vinyl acetate, N-vinyl pyrrolidone, and styrene macromer. Preferably, the (meth)acrylic pressure sensitive adhesives include from 0 to 20 weight percent of acrylic acid and from 100 to 80 weight percent of isooctyl acrylate, butyl acrylate, or ethyl hexyl acrylate. Useful tackifiers that can be used to over-tackify these materials are rosin esters such as that commercially available from Hercules, Inc. under the trade designation "FORAL 85," aromatic resins such as that commercially available from Hercules, Inc. under the trade designation "PICCOTEX LC-55WK," and terpene resins such as those commercially available from Arizona Chemical Co. under the trade designations "SYLVAREZ 2019" and "ZONAREZ B-100."

Latent, over-tackified, poly(alpha-olefin) adhesives, also called poly(l-alkene) adhesives, generally include either a substantially uncrosslinked polymer or a uncrosslinked polymer that may have radiation activatable functional groups grafted thereon as described in U.S. Pat. No. 5,112,882 (Babu et al.). Tackifying materials that can be used to over-tackify such adhesives are typically resins that are miscible in the poly(alpha-olefin) polymer. Useful tackifying resins include resins derived by polymerization of C5 to C9 unsaturated hydrocarbon monomers, polyterpenes, phenol- or styrene-modified polyterpenes, and the like. Examples of such resins based on a C5 olefin fraction of this type include those commercially available from Goodyear under the trade designation "WINGTACK."

Latent, over-tackified, silicone adhesives include two major components, a polymer or gum, and a tackifying resin. The polymer is typically a high molecular weight polydimethylsiloxane or polydimethyldiphenylsiloxane, that contains residual silanol functionality (SiOH) on the ends of the polymer chain, or a block copolymer including polydiorganosiloxane soft segments and urea terminated hard segments. The tackifying resin, which can be used to over-tackify these adhesives, include a three-dimensional silicate structure that is endcapped with trimethylsiloxy groups (OSiMe₃) and also contains some residual silanol functionality. Examples of tackifying resins include those commercially available from General Electric Co., Silicone Resins Division, Waterford, NY, under the trade designation "SR 545," and from Shin-Etsu Silicones of America, Inc., Torrance, CA under the trade designation "MQD-32-2." Typically, to over-tackify a silicone resin, the tackifier is present in an amount of at least about 50 wt%. Manufacture of typical silicone pressure sensitive adhesives is described in U.S. Pat. No. 2,736,721 (Dexter). Manufacture of silicone urea block copolymer pressure sensitive adhesive is described in U.S. Pat. No. 5,214,119 (Leir et al.).

The over-tackified adhesive of the present invention is low in tack or totally tack-free at room temperature (i.e., about 20°C to about 25°C). It derives its low tack or no tack characteristics at room temperature from its high Tg and/or high shear storage modulus. In general, the high Tg and/or high modulus over-tackified adhesives have significant glassy character and are non-elastomeric in nature. In addition to having a Tg that is at least about 10°C, the low tack or non-tacky latent, over-tackified adhesives also possess a shear storage modulus of at least 5 x 10⁵ Pascals at 23°C and 1 Hz. To transform the over-tackified adhesive to a material that exhibits pressure sensitive adhesive properties, the plasticizing agent should be chosen to lower the latent adhesive's Tg to below about 10°C, preferably below 0°C, and its shear storage modulus to below the Dahlquist Criterion.

### Polymerization Methods

The elastomers of the plasticizer-activatable latent, over-tackified, adhesives useful in the invention can be polymerized by techniques including, but not limited to, the conventional techniques of solvent polymerization, dispersion polymerization, emulsion polymerization, suspension polymerization, solventless bulk polymerization, and radiation polymerization, including processes using ultraviolet light, electron beam, and gamma radiation. These methods are well known to those skilled in the art.

### Methods of Application of Latent, Over-Tackified, Adhesives

### Solvent coating:

Any conventional coating technique can be used to apply the latent, over-tackified, adhesive compositions to target substrates from solvent solutions that can include water and/or organic solvents. Useful coating techniques include brush, roll, spray, spread, wire, gravure, transfer roll, air knife, curtain, or doctor blade coating.

The latent, over-tackified, adhesive composition can be applied to any suitable substrate that can be a sheet, a fiber, or a shaped article. However, the preferred substrates are those used for pressure sensitive adhesive products. Latent, over-tackified, adhesive composition can be applied to at least one major surface of suitable flexible or inflexible backing materials. Useful flexible backing materials include, for example, paper, plastic films such as polypropylene, polyethylene, polyvinylchloride, polytetrafluoroethylene, polyvinylchloride, polyester, polyethylene terephthalate, cellulose acetate, ethyl cellulose, and the like.

Backings may also be constructions with irregular surfaces, such as woven fabric, nonwoven fabric, paper, or other materials having rough surfaces. Such woven fabrics can be formed from threads of synthetic or natural materials (e.g., cotton, nylon, rayon, glass, or ceramic material). Such nonwoven fabrics include air-laid webs of natural or synthetic fibers or blends of these, if the webs are not too porous to prevent substantial migration of the coating material into the backing material. Due to its high porosity, paper itself is usually not suitable unless heavier coatings of greater than one micrometer are applied in an effort to offset coating material soaking into the paper. However, glassine, plastic-coated, or impregnated paper is suitable. Many of these backings are commonly used in pavement marking tapes. In addition, suitable backings can be formed of metal, metallized polymeric film, natural or synthetic rubber, or ceramic sheet material. Primers can be used, but are not necessary.

The coating thickness will vary depending upon various factors such as, for example, the particular application, the coating formulation, and the nature of the substrate (e.g., its absorbency, porosity, surface roughness, crepe, chemical composition, etc.). Typically, a porous substrate or a rough surface will require a thicker coating than less porous substrates or smoother surfaces. Over-tackified adhesive coatings typically will have a thickness of about 25 microns (i.e., micrometers) to about 250 microns.

### Hot Melt coating:

Latent, over-tackified, adhesive compositions may be used to make a coatable thermoplastic hot melt adhesive by techniques known to one of skill in the art. Such coatable hot melt adhesives may be used to form a latent, over-tackified, adhesive sheet by coating the melted adhesive onto a sheet material or another suitable substrate. The sheet material is preferably selected from a tape backing, a film backing, or a release liner.

The latent, over-tackified, thermoplastic hot melt adhesive can be delivered out of a film die and subsequently coated by contacting the drawn adhesive with a moving plastic web or other suitable substrate. A related coating method involves extruding the coatable thermoplastic hot melt latent, over-tackified, adhesive and a coextruded backing material from a film die and cooling the layered product to form a latent adhesive tape. Other forming methods involve directly contacting the coatable thermoplastic hot melt latent, over-tackified, adhesive to a rapidly moving plastic web or other suitable preformed substrate. Using this method, the latent, over-tackified, adhesive is applied to the moving preformed web using a die having flexible die lips, such as a rotary rod die. After forming by any of these continuous methods, the latent, over-tackified, adhesive films or layers can be solidified by quenching using both direct methods (e.g., chill rolls or water baths) and indirect methods (e.g., air or gas impingement).

### Powder coating:

One of the advantages of using the latent, over-tackified, adhesive compositions useful in the present invention is the ability to deliver them as solid, powdered materials using powder coating techniques. In addition to direct polymerization methods (e.g., spray dried emulsion, suspension, or dispersion polymerization) known to one of skill in the art, the material in powdered form can also be prepared by preparing solvent or hot-melt coated films and then using mechanical techniques such as cryo-grinding or hammer milling to grind these materials. Solid, powdered plasticizing agents can be prepared using similar mechanical methods.

In one embodiment of the invention, a mixture of a powdered latent, over-tackified, adhesive and a powdered, plasticizing agent is powder coated onto all or a portion of a substrate. The powder coating is then exposed to sufficient heat to melt the plasticizing agent, allowing it to absorb into and modify the Tg and shear storage modulus of the latent, over-tackified, adhesive to form a pressure sensitive adhesive material. The heat source can be diffuse so to activate broad areas of the powdered latent, over-tackified, adhesive coating or focused to activate on discrete, predetermined portions of the powdered coating. The heat can fuse the coating into a smooth pressure sensitive adhesive coating, or all or part of the particle character of the latent, over-tackified, adhesive can be maintained.

Another embodiment of the invention involves the initial coating of a powdered latent, over-tackified, adhesive to all or a portion of a substrate. All or a portion of the powdered latent, over-tackified, adhesive coating can then be activated to a material having pressure sensitive adhesive properties by introducing a liquid plasticizing agent by means of spray, flood, or other liquid delivery techniques (such as ink jet) to the areas of the powdered latent, over-tackified, adhesive coating. Thus, patterned layers can be created by spraying of the liquid plasticizing agent over the powdered latent, over-tackified, adhesive.

Alternatively, patterned layers can be created by heating the powdered latent, over-tackified, adhesive overlaid with solid plasticizer (powder or film) with a focused heating source, such as an IR laser, or a diffuse heating source using a patterned mask or overlay. The powdered latent, over-tackified, adhesive may be partially or completely fused into a smooth coating prior to the application of the plasticizing agent.

An additional advantage associated with these powder coating processes, wherein only a portion of the latent, over-tackified, adhesive powder coating is plasticized, is the ability to readily remove the unplasticized particles from the substrate. Once removed from the substrate, the plasticized pressure sensitive material remains and the unactivated latent, over-tackified, adhesive particles can be recycled for future use. Other methods conventionally used for delivering or creating patterned pressure sensitive adhesive coated articles, such as hot-melt spray or screen-printing, can lead to adhesive materials that cannot be reused.

Similar to coatings prepared using these powder coating techniques, hot melt or solvent coated latent, over-tackified, adhesive films can be selectively activated to exhibit pressure sensitive adhesive properties using the heat activation of solid plasticizer or liquid plasticizing agent by activation methods described below.

Additionally, unplasticized latent, over-tackified, adhesive particles or films can be coated with a solid plasticizer in the form of a powder, film, particles and the like, heated to a temperature sufficient to melt the plasticizer and activate the pressure sensitive properties of the combined latent, over-tackified, adhesive and the plasticizer.

Yet, another advantage of powder format of the latent, over-tackified, adhesive is the ease of blending one or more of the the latent, over-tackified, adhesives with other powdered components. Alternatively, the powdered components can be other polymeric or inorganic materials which when plasticized yield composite materials bonded together through the plasticized polymer composition of the current invention.

Useful techniques for powder coating of the latent, over-tackified, adhesive include, but are not limited to, fluidized-bed coating, electrostatic spray processes, scatter coating, slurry coating a dispersion, and using a sieve to deposit the powder in a manner similar to screen printing. In the fluidized-bed coating process, the powdered material is placed in a container having a porous plate as its base. Air is passed through the plate, causing the powder to expand in volume and fluidize. In this state, the powder possesses some of the characteristics of a fluid. The substrate is heated in an oven to a temperature above the melting point of the powder and dipped into the fluidized bed where the particles melt on the surface to form a coating. Alternatively, the cold substrate can be run over a bed of fluidized particles that are tribo-charged and cling to the web. The powder-coated substrate can then be run through a heated zone or nip to fuse the particles. In the electrostatic spray process the powdered material is dispersed in an air stream and passed through a corona discharge field where the particles acquire an electrostatic charge. The charged particles are attracted to and deposited on the grounded substrate. The substrate, usually electrostatically coated at room temperature, is then placed in an oven where the powder melts and forms a coating. *See for example,* Kirk-Othmer Encyclopedia of Chemical Technology, 4^{th} Edition, Wiley: 1993, Vol. 6, pages 635-636.

Methods of imagewise forming latent, over-tackified, adhesives are described in U.S. Pat No. 6.509, 128 entitled "Imagewise Printing of Adhesives and Limited Coalescence Polymerization Method".

In addition to a coating of latent, over-tackified, adhesive onto a substrate, as described above, other conventional coatings, such as a low adhesion backsize, primer coating, and the like can be coated on the substrate. Such coatings are known to those skilled in the art and are indicative of the intended use of the coated sheet materials. Furthermore, substrates may be pretreated prior to use. Latent, over-tackified, adhesive coated sheet materials can take the form of any article conventionally known to be utilized with known PSA compositions, such as labels, tapes, transfer tapes (including a film of the PSA borne on at least one release liner), signs, covers, marking indices, and the like.

### Activation Aids and Methods of Activating

The methods described herein include the use of an activation aid to activate the latent, over-tackified, adhesive. The activation aid is used to activate the adhesive to adhere, for example, two substrates together. The activation aid is a plasticizer (i.e., plasticizing agent). Generally, the plasticizing agents can be liquid or solid, have a range of molecular weights and architectures, and are compatible with the latent, over-tackified, adhesive. They can be monomeric or polymeric, volatile or non-volatile, reactive or non-reactive. Additionally, mixtures of plasticizing agents can be used in the present invention.

Generally, liquid plasticizing agents are readily combinable with the latent, over-tackified, adhesive. Although somewhat more challenging to use, solid plasticizing agents can advantageously be used in applications, processes or articles where the controlled plasticization of the latent, over-tackified, adhesive is desired. Once heated to the melting or glass transition temperature of the solid plasticizing agent, the latent, over-tackified, adhesive is plasticized and the mixture exhibits pressure sensitive adhesive properties.

Additionally, the plasticizing agents can have a range of molecular weights and architectures. That is, the plasticizing agents can be either polymeric or monomeric in nature. Typically, monomeric plasticizing agents are derived from low molecular weight acids or alcohols, which are then esterified with respectively a monofunctional alcohol or monofunctional acid. Useful polymeric plasticizing agents are typically derived from cationically or free-radically polymerizable, condensation polymerizable, or ring-opening polymerizable monomers to make low molecular weight polymers.

Useful plasticizing agents are compatible with the latent, over-tackified, adhesive, such that once the plasticizing agent is diffused into the latent, over-tackified, adhesive, the plasticizing agent does not phase separate from the latent, over-tackified, adhesive. By "phase separation" or "phase separate", it is meant that by differential scanning calorimetry (DSC) no detectable thermal transition, such as a melting or glass transition temperature can be found for the pure plasticizing agent in plasticized adhesive composition. Some migration of the plasticizing agent from or throughout the plasticized pressure sensitive adhesive can be tolerated, such as minor separation due to composition equilibrium or temperature influences, but the plasticizing agent does not migrate to the extent that phase separation occurs between the latent, over-tackified, adhesive and the plasticizing agent. When polymeric plasticizing agents are used, they tend to be a bit more limited in their applications than monomeric plasticizing agents and, in general, the lower the molecular weight of the polymeric plasticizing agent, the higher their compatibility with the latent, over-tackified, adhesive, and higher diffusiveness into the latent, over-tackified, adhesive. Plasticizing agent compatibility with the latent, over-tackified, adhesive can also be dependent upon the chemical nature of the plasticizing agent and the monomeric content of the latent, over-tackified, adhesive. For example, polymeric plasticizing agents based on polyether backbones (such as polyethylene glycols) are observed to be more compatible than polyester plasticizing agents, especially when higher levels of acidic comonomer are used.

Suitable plasticizing agents are preferably non-volatile such that they remain present and stable in the plasticized adhesive. The presence of the plasticizing agent in the adhesive compositions operates to maintain adhesion properties of the adhesive compositions. However, if transient adhesion is desired, a volatile plasticizer can be used.

Additionally, useful plasticizing agents can be reactive or non-reactive. Preferably, they are non-reactive. Plasticizing agents having acrylate functionality, methacrylate functionality, styrene functionality, or other ethylenically unsaturated, free radically reactive functional groups are generally reactive in the presence of the latent, over-tackified, adhesive. Such plasticizers include acrylated polyesters and acrylated urethanes.

Examples of preferred plasticizing agents include polyalkylene oxides having weight average molecular weights of about 150 to about 5,000, preferably of about 150 to about 1,500, such as polyethylene oxides, polypropylene oxides, polyethylene glycols; alkyl or aryl functionalized polyalkylene oxides, such as that commercially available from ICI Chemicals under the trade designation "PYCAL 94" (a phenyl ether of polyethylene oxide); benzoyl functionalized polyethers, such as that commercially available from Velsicol Chemicals under the trade designation "BENZOFLEX 400" (polypropylene glycol dibenzoate); monomethyl ethers of polyethylene oxides; monomeric adipates such as dioctyl adipate, dibutyl adipate, dibutoxyethoxyethyl adipate, and dibutoxypropoxypropyl adipate; polymeric adipates such as polyester adipates; citrates such as acetyltri-n-butyl citrate; phthalates such as butyl benzylphthalates, dibutyl phthalate, diisoctyl phthalate; trimellitates; sebacates such as dibutylsebacate; myristates such as isopropyl myristate; polyesters such as those commercially available from C.P. Hall Co. under the trade designation "PARAPLEX"; phosphate esters such as those commercially available from Monsanto under the trade designation "SANTICIZER" (e.g., 2-ethylhexyl diphenylphosphate and t-butylphenyl diphenylphosphate); glutarates such as that commercially available form C.P. Hall Co. under the trade designation "PLASTHALL 7050" (a dialkyl diether glutarate); oils such as mineral oil; other polymeric plasticizing agents such as polyurethanes, polyureas, polyvinylethers, polyethers, polyacrylates; and mixtures thereof.

The amount of plasticizing agent used depends upon the desired level of tack in the resultant activated adhesive (i.e., the plasticized pressure sensitive adhesive), the level of peel and shear strength desired, the level of permanence desired, and the level of tackification of the latent, over-tackified, adhesive. For example, as the modulus of a latent, over-tackified, adhesive increases, higher levels of plasticizing agent are necessary to bring the adhesive modulus down into the useful range for pressure sensitive bond making (i.e., the shear storage modulus is below the Dahlquist Criterion). As the amount of plasticizing agent in the pressure sensitive adhesive is increased, maintaining cohesive strength becomes increasingly difficult, thus creating a practical upper limit on the amount of plasticizing agent that can be tolerated in the final pressure sensitive adhesive. High levels of plasticizing agent may be beneficial if properties such as aggressive tack, low temperature performance, or smooth peel are required. Considering practical constraints for pressure sensitive adhesive formulation, it should be clear that there is also an upper limit for the shear modulus of the latent, over-tackified, adhesive to begin with and still enable pressure sensitive behavior with plasticizing agent loadings of 100 pph or less. Actual modulus values are difficult to define as it strongly depends on the type of plasticizing agent, plasticizing efficiency, and the compatibility of the plasticizing agent with the latent, over-tackified, adhesive.

Any conventional technique can be used to apply the plasticizer to the latent, over-tackified, adhesive, whether it be before, during, or after deposition of the latent adhesive on a substrate. For example, a plasticizer can be applied in solid or liquid form. It can be optionally encapsulated, It can be applied in an imagewise fashion using the same or similar techniques as used to imagewise print a latent adhesive toner described in U.S. Pat. No. 6,509,128, entitled "Imagewise Printing of Adhesives and Limited Coalescence Polymerization Method". If a liquid plasticizing agent is used, it can be applied by means of spray, flood, brush, roll, spread, wire, gravure, transfer roll, air knife, curtain, doctor blade coating, or other liquid delivery techniques (such as ink jet) to the areas of the latent, over-tackified, adhesive. If a solid, powdered plasticizing agent is used, it can be applied by means of conventional powder coating techniques. Solid, powdered plasticizing agents can be prepared using mechanical techniques such as cryo-grinding or hammer milling. The powder coating is then typically exposed to sufficient heat to melt the plasticizing agent, allowing it to absorb into and modify the Tg and shear storage modulus of the latent, over-tackified, adhesive to form a pressure sensitive adhesive material. The heat source can be diffuse so to activate broad areas of the latent, over-tackified, adhesive or focused to activate on discrete, predetermined portions thereof.

### Examples

This invention is further illustrated by the following examples that are not intended to limit the scope of the invention. These examples are merely for illustrative purposes only and are not meant to be limiting on the scope of the appended claims. All parts, percentages, ratios, etc. in the examples and the rest of the specification are by weight unless indicated otherwise.

| **Table of Abbreviations** | |
|---|---|
| **Trade Designation or Other Abbreviation** | **Description** |
| DYTEK A | an organic diamine, commercially available from DuPont; Wilmington, DE |
| H-MDI | DESMODUR W H 12MDI, Methylenedicyclohexylene-4,4'-diisocyanate, commercially available from Bayer; Pittsburgh. PA |
| m-TMXDI | Meta-TMXDI ,Benzene,1,3-Bis(1-isocyanato-1-methylethyl)-, commercially available from Cytec Industries Inc; West Paterson, NJ |
| PET | an aminated-polybutadiene primed polyester film of polyethylene terephthalate having a thickness of 38 micrometers |
| PDMS diamine 33,000 | an approximately 33,000 molecular weight polydimethylsiloxane diamine prepared as described in Example 2 of U.S. Patent Number 5,461,134 |
| PDMS diamine 10.000 | an approximately 10,000 molecular weight polydimethylsiloxane diamine prepared as described in Example 2 of U.S. Patent Number 5,461,134 |
| SR-545 | a 60% solids solution of MQ silicate resin in toluene, commercially available from GE Silicones; Waterford, NY under the trade designation SR-545 |
| SR-1000 | an MQ silicate resin (100% solids), commercially available from GE Silicones: Waterford. NY under the trade designation SR-1000 |
| Mineral Oil | Heavy Mineral Oil Laxative, commercially available from MediKay Laboratories in Brookfield, MO |
| PLASTHALL DIODD | Diisooctyl dodecanedioate, commercially available from C.P. Hall Co.; Chicago, IL |
| SANTICIZER 141 | 2-ethylhexyl diphenylphosphate commercially available from Solutia; Laguna Hills, CA |
| SHELLFLEX 371 | A processing oil commercially available from Shell Chemicals; Houston. TX |
| IPM | Isopropyl myristate commercially available from Aldrich Chemical: Milwaukee. WI |
| Aziridine Crosslinker | Isopthalic acid di-(2-methyl-aziridine) amide |
| IOA | Isooctyl acrylate |
| AA | Acrylic acid |
| MA | Methyl acrylate |
| SYLVAREZ 2019 | Terpene tackifier commercially available from Arizona Chemical, Panama City, FL |
| KRATON 1107 | Styrene-isoprene block copolymer from Shell Chemicals; Houston, TX |
| REGALREZ 1126 | Hydrogenated tackifier resin commercially available from Hercules, Wilmington, DE |
| KRATON G1650 | Styrene-ethylene/butylene block copolymer from Shell Chemicals: Houston, TX |
| PERKADOX PD-50S-ps-a | a paste containing 50% active dichlorobenzoyl peroxide available from Akzo Nobel Chemicals, Inc.; Chicago, IL |
| UVITEX OB | optical brightener available from Ciba Specialty Chemicals |
| PSA6573A SILGRIP | laminating grade silicone adhesive, having a solids content of approximately 59% by weight commercially available from General Electric Silicones; Waterford, NY |

### Test Methods

### 180° Peel Adhesion

This peel adhesion test is similar to the test method described in ASTM D 3330-90, substituting a glass substrate for the stainless steel substrate described in the test.

Adhesive coatings on polyester film were cut into 1.27 centimeter by 15 centimeter strips. Each strip was then adhered to a 10 centimeter by 20 centimeter clean, solvent washed glass coupon using a 2-kilogram roller passed once over the strip. The bonded assembly dwelled at room temperature for about one minute and was tested for 180° peel adhesion using an IMASS slip/peel tester (Model 3M90, commercially available from Instrumentors Inc., Strongsville, OH) at a rate of 30 cm/minute (12 inches/minute) or 2.3 meters/minute (90 inches/minute) over a five second data collection time. Two samples were tested; the reported peel adhesion value is an average of the peel adhesion value from each of the two samples.

### Finger Tack Test

The tack of the coated adhesive layer was estimated by touching the adhesive with a finger and ranking the tack on a 0-3 scale, 0 = no tack, 3 = extremely tacky.

### Example 1

An acrylic pressure sensitive adhesive solution in ethyl acetate containing 100 parts by weight of a polymer prepared from a composition of monomers in the ratio 70/23/7 IOA/MA/AA with an inherent viscosity of about 0.50 deciliters per gram (dl/g) (measured at a concentration of 0.2 g/dl in ethyl acetate and a temperature of 27°C) was mixed with 150 parts of SYLVAREZ 2019. Just prior to coating, 2 parts (based on the 100 parts of adhesive polymer) of a 5% solids solution of Aziridine Crosslinker in toluene was added. Using a knife coater, the solution was cast on a PET film and oven dried at 70°C for 15 minutes. The resulting tack-free coating was about 25 microns thick. To test the ability of the tack-free coating to become tacky upon addition of plasticizer, a sample of the tack-free coating was laid flat on a surface. A cotton swab was dipped into the plasticizer and the excess was removed so the cotton was saturated. The plasticizer was applied to the coating via the cotton swab and allowed to penetrate at room temperature. The time needed to make tack appear in the sample is listed in Table 1. If the sample surface remained greasy, no time to activate was listed. Also, the samples were not listed if they did not retain tack for 24 hours.

### Example 2

A block copolymer adhesive was formulated with a calculated Tg of 278 K, 100 parts of KRATON 1107 and 140 parts of REGALREZ 1126, were mixed as a toluene solution at 30% solids. Using a knife coater, the solution was cast on a PET film and oven dried at 70°C for 15 minutes. The resulting tack-free coating was about 25 microns thick. To test the ability of the tack-free coating to become tacky upon addition of plasticizer, plasticizer was applied via a cotton swab as described in Example 1. The time needed to make tack appear in the sample is listed in Table 1.

### Example 3

A block copolymer adhesive was formulated with a calculated Tg of 278 K, 100 parts of KRATON G1650 and 115 parts of REGALREZ 1126, were mixed as a toluene solution at 30 % solids. Using a knife coater, the solution was cast on a PET film and oven dried at 70°C for 15 minutes. The resulting tack-free coating was about 25 microns thick. To test the ability of the tack-free coating to become tacky upon addition of plasticizer, plasticizer was applied via a cotton swab as described in Example 1. The time needed to make tack appear in the sample is listed in Table 1.

### Example 4

In a reaction vessel was placed 11.77 parts of PDMS diamine 33,000 and 30.00 parts of a 60% solution in toluene of SR-545 and 0.04 parts of Dytek A. Toluene (37.00 parts) and 2-propanol (21.00 parts) were added to make the solids content 30%. The solution was stirred at room temperature, 0.19 parts of H-MDI was added and the resulting mixture was stirred for two hours to give a PSA solution with a weight ratio of elastomer to SR-545 (tackifier resin) of 40:60. The resulting solution was solvent coated onto a release liner and dried for 10 minutes at 70°C. The resulting PSA coating was laminated onto a PET film to form a tack-free coating. To test the ability of the tack-free coating to become tacky upon addition of plasticizer, plasticizer was applied via a cotton swab as described in Example 1. The time needed to make tack appear in the sample is listed in Table 1.

**Table 1**

| **Example** | **Plasticizer Used** | **Time to develop tack** |
|---|---|---|
| 1 | IPM | 10-20 seconds |
| 1 | SANTICIZER 141 | 10-20 seconds |
| 2 | PLASTHALL DIODD | Not measured |
| 2 | SHELLFLEX 371 | 1-2 minutes |
| 2 | Mineral oil | 4-5 minutes |
| 2 | IPM | 10-20 seconds |
| 3 | PLASTHALL DIODD | Not measured |
| 3 | SHELLFLEX 371 | 10 minutes |
| 3 | Mineral oil | > 10 minutes |
| 3 | IPM | 4-5 minutes |
| 4 | IPM | 10-20 seconds |

### Example 5

Strips of tack-free adhesive coatings from Examples I and 4 with a surface of 413 cm² were printed with plasticizer using an ink-jet print head having a resolution of 300 dots per 2.5 cm. The print head was filled with either SANTICIZER 141 or IPM. The actual weight of plasticizer printed on the tack-free adhesive coatings was measured by measuring the weight of plasticizer that was ejected from the head for a given print condition. After printing, the adhesive was allowed to equilibrate for 24 hours at 21°C and 50% relative humidity. The 180° peel force test was run as described above. The data are shown in Table 2.

**Table 2**

| **Example** | **Plasticizer** | **Weight of Plasticizer Deposited (mg)** | **180° Peel at 30 cm/min (N/dm)** |
|---|---|---|---|
| 4 | IPM | 2.5 | 52.5 |
| 4 | IPM | 5 | 78.1 |
| 4 | IPM | 7.5 | 79.0 |
| 4 | IPM | 10 | 86.0 |
| 4 | IPM | 19.5 | 89.5 |
| 1 | SANTICIZER 141 | 5.6 | 0 |
| 1 | SANTICIZER 141 | 16.8 | 7.7 |
| 1 | SANTICIZER 141 | 22.4 | 12.3 |
| 1 | SANTICIZER 141 | 29 | 15.3 |
| 1 | SANTICIZER 141 | 73.2 | 32.8 |
| 1 | SANTICIZER 141 | 146.4 | 8.5 |

### Example 6 and Comparative Example C1

A solution of 8.58 parts PERKADOX PD-50S-ps-a, 528.7 parts toluene, and 0.343 part UVITEX OB was added to 2905 parts PSA6573A SILGRIP silicone adhesive and mixed well to obtain a homogeneous adhesive solution. This catalyzed adhesive solution was knife coated onto a release liner at a thickness appropriate to provide 80 micrometer thick dry adhesive and dried at a line speed of 3.7 meters/minute in a three-zoned oven where zones 1, 2, and 3 had lengths of 3, 3, and 6 meters respectively and were set at temperatures of 38, 70, 150°C respectively. The resulting PSA coating was laminated to a PET film. The finger tack and 180° peel were tested, the data are recorded in Table 3. To test the ability of the tack-free coating to become tacky upon addition of plasticizer, plasticizer was applied via a cotton swab as described in Example 1. The resulting finger tack and 180° peel data are listed in Table 3.

**Table 3**

| **Example** | **Plasticizer** | **Time to Tack** | **Finger Tack** | **180° Peel at 2.3 m/min (N/dm)** |
|---|---|---|---|---|
| C1 | None | ---- | 0 | 1.5 |
| 6 | IPM | 10-20 seconds | 2 | 77.7 |

### Example 7 and Comparative Example C2

In a reaction vessel was placed 15.37 parts of PDMS diamine 10,000. Toluene (27.50 parts) and 2-propanol (27.50 parts) were added to make the solids content 45%. The solution was stirred at room temperature, 0.38 part of m-TMXDI was added and the resulting mixture was stirred for six hours to give a solution of elastomer. To this solution was added 29.25 parts of SR-1000. The resulting PSA solution had a weight ratio of elastomer to SR-1000 (tackifier resin) of 35:65. The resulting solution was solvent coated onto a PET film and dried for 10 minutes at 70°C to form a tack-free coating. To test the ability of the tack-free coating to become tacky upon addition of plasticizer, plasticizer was applied via a cotton swab as described in Example 1. The time to develop tack, 180° peel and finger tack test data are shown below in Table 4.

**Table 4**

| **Example** | **Plasticizer** | **Time to Tack** | **180° Peel at 2.3 m/min (N/dm)** | **Finger Tack** |
|---|---|---|---|---|
| 7 | IPM | 10-20 seconds | 38.9 | 3 |
| C2 | none | ---- | 34.1* | 0 |

| | | | | |
|---|---|---|---|---|
| * shocky peel | | | | |

Various modifications and alterations of this invention will become apparent to those skilled in the art without departing from the scope of this invention, and it should be understood that this invention is not to be unduly limited to the illustrative embodiments set forth hereinabove.

## Claims

1. A method of applying a pressure sensitive adhesive to a substrate; the method comprising:
providing a substrate;
applying a latent, over-tackified, adhesive to the substrate; and
applying a plasticizing agent which is compatible with the latent, over-tackified, adhesive, to activate the latent, over-tackified, adhesive to form a pressure sensitive adhesive.

2. The method of claim 1 wherein applying the plasticizing agent occurs subsequent to applying the latent, over-tackified, adhesive.

3. The method of claim 2 wherein the plasticizing agent is applied in selective regions to the latent, over-tackified, adhesive disposed on the substrate.

4. The method of claim 1 wherein the latent, over-tackified, adhesive and the plasticizing agent are simultaneously applied to the substrate.

5. The method of claim 4 wherein the plasticizing agent is a solid.

6. The method of claim 5 wherein heat is applied to the plasticizing agent to cause it to activate the latent, over-tackified, adhesive to form a pressure sensitive adhesive.

7. The method of claim 6 wherein heat is applied in selective regions to the plasticizing agent and latent, over-tackified, adhesive disposed on the substrate.

8. A method of adhering substrates together; the method comprising:
providing a first substrate;
applying a latent, over-tackified, adhesive to the first substrate;
applying a plasticizing agent which is compatible with the latent, over-tackified, adhesive, to activate the latent, over-tackified, adhesive to form a pressure sensitive adhesive; and
applying a second substrate to contact the pressure sensitive adhesive disposed on the first substrate.

9. The method of claim 8 wherein applying the plasticizing agent occurs subsequent to applying the latent, over-tackified, adhesive.

10. The method of claim 9 wherein the plasticizing agent is applied in selective regions to the latent, over-tackified, adhesive disposed on the substrate.

11. The method of claim 1 or 8 wherein the plasticizing agent is non-volatile.

12. The method of claim 1 or 8 wherein the plasticizing agent is non-reactive.

13. The method of claim 1 or 8 wherein the latent, over-tackified, adhesive comprises a natural rubber, synthetic rubber, styrene block copolymer, (meth)acrylic, poly(alpha-olefin), or silicone.

## Patentansprüche

1. Verfahren zum Aufbringen eines Haftklebstoffs auf ein Substrat, wobei das Verfahren umfasst:
Bereitstellen eines Substrats;
Aufbringen eines latenten, über-tackifizierten, Klebstoffs auf das Substrat; und
Aufbringen eines mit dem latenten, über-tackifizierten, Klebstoff kompatiblen weichmachenden Mittels zur Aktivierung des latenten, über-tackifizierten Klebstoffs, um einen Haftklebstoff zu bilden.

2. Verfahren nach Anspruch 1, wobei das Aufbringen des weichmachenden Mittels nach dem Aufbringen des latenten, über-tackifizierten, Klebstoffs erfolgt.

3. Verfahren nach Anspruch 2, wobei das weichmachende Mittel in ausgewählten Bereichen auf den auf dem Substrat angeordneten latenten, über-tackifizierten, Klebstoff aufgebracht wird.

4. Verfahren nach Anspruch 1, wobei der latente, über-tackifizierte, Klebstoff und das weichmachende Mittel gleichzeitig auf das Substrat aufgebracht werden.

5. Verfahren nach Anspruch 4, wobei das weichmachende Mittel ein Feststoff ist.

6. Verfahren nach Anspruch 5, wobei dem weichmachenden Mittel Wärme zugeführt wird, um es zur Aktivierung des latenten, über-tackifizierten, Klebstoffs zu veranlassen, um einen Haftklebstoff zu bilden.

7. Verfahren nach Anspruch 6, wobei dem weichmachenden Mittel und dem auf dem Substrat angeordneten latenten, über-tackifizierten, Klebstoff in ausgewählten Bereichen Wärme zugeführt wird.

8. Verfahren um Substrate miteinander zu verkleben, wobei das Verfahren umfasst:
Bereitstellen eines ersten Substrats;
Aufbringen eines latenten, über-tackifizierten, Klebstoffs auf das erste Substrat;
Aufbringen eines mit dem latenten, über-tackifizierten, Klebstoff kompatiblen weichmachenden Mittels zur Aktivierung des latenten, über-tackifizierten, Klebstoffs, um einen Haftklebstoff zu bilden; und
Aufbringen eines zweiten Substrats um in Kontakt mit auf dem ersten Substrat angeordneten Haftklebstoff zu sein.

9. Verfahren nach Anspruch 8, wobei das Aufbringen des weichmachenden Mittels nach dem Aufbringen des latenten, über-tackifizierten, Klebstoffs erfolgt.

10. Verfahren nach Anspruch 9, wobei das weichmachende Mittel in ausgewählten Bereichen auf den auf dem Substrat angeordneten latenten, über-tackifizierten, Klebstoff aufgebracht wird.

11. Verfahren nach Anspruch 1 oder 8, wobei das weichmachende Mittel nichtflüchtig ist.

12. Verfahren nach Anspruch 1 oder 8, wobei das weichmachende Mittel nichtreaktiv ist.

13. Verfahren nach Anspruch 1 oder 8, wobei der latente, über-tackifizierte, Klebstoff einen Naturkautschuk, einen Synthesekautschuk, ein Styrol-Blockcopolymer, ein (Meth)acrylat, ein Poly(alpha-olefin) oder ein Silikon umfasst.

## Revendications

1. Procédé pour appliquer un adhésif sensible à la pression sur un substrat, le procédé comprenant les étapes consistant à
se procurer un substrat ;
appliquer sur le substrat un adhésif latent, rendu hyper-collant ; et
appliquer un agent plastifiant qui est compatible avec l'adhésif latent, rendu hyper-collant, pour activer l'adhésif latent, rendu hyper-collant, afin de former un adhésif sensible à la pression.

2. Procédé selon la revendication 1 dans lequel l'application de l'agent plastifiant se fait après l'application de l'adhésif latent, rendu hyper-collant.

3. Procédé selon la revendication 2 dans lequel l'agent plastifiant est appliqué dans des régions sélectives sur l'adhésif latent, rendu hyper-collant, placé sur le substrat.

4. Procédé selon la revendication 1 dans lequel l'adhésif latent, rendu hyper-collant, et l'agent plastifiant sont appliqués simultanément sur le substrat.

5. Procédé selon la revendication 4 dans lequel l'agent plastifiant est un solide.

6. Procédé selon la revendication 5 dans lequel de la chaleur est appliquée sur l'agent plastifiant pour faire en sorte qu'il active l'adhésif latent, rendu hyper-collant, pour former un adhésif sensible à la pression.

7. Procédé selon la revendication 6 dans lequel de la chaleur est appliquée dans des régions sélectives sur l'agent plastifiant et l'adhésif latent, rendu hyper-collant, placés sur le substrat.

8. Procédé pour coller des substrats l'un à l'autre, le procédé comprenant les étapes consistant à :
se procurer un premier substrat ;
appliquer un adhésif latent, rendu hyper-collant, sur le premier substrat ;
appliquer un agent plastifiant qui est compatible avec l'adhésif latent, rendu hyper-collant, pour activer l'adhésif latent, rendu hyper-collant, afin de former un adhésif sensible à la pression ; et
appliquer un second substrat pour le mettre en contact avec l'adhésif sensible à la pression placé sur le premier substrat.

9. Procédé selon la revendication 8 dans lequel l'application de l'agent plastifiant se fait après l'application de l'adhésif latent, rendu hyper-collant.

10. Procédé selon la revendication 9 dans lequel l'agent plastifiant est appliqué dans des régions sélectives sur l'adhésif latent, rendu hyper-collant placé sur le substrat.

11. Procédé selon la revendication 1 ou 8 dans lequel l'agent plastifiant est non-volatil.

12. Procédé selon la revendication 1 ou 8 dans lequel l'agent plastifiant est non réactif.

13. Procédé selon la revendication 1 ou 8 dans lequel l'adhésif latent, rendu hyper-collant comprend un caoutchouc naturel, un caoutchouc synthétique, un copolymère séquencé de styrène, un (méth)acrylique, une poly(alpha-oléfine) ou une silicone.
